# EUROPÄISCHE PATENTANMELDUNG

(11) **EP 4 272 848 A1**
(43) Veröffentlichungstag der Anmeldung: **08.11.2023**
(21) Anmeldenummer: 23165677.8
(22) Anmeldetag: 30.03.2023
(51) Int. Cl.: A63C 11/00

(54) **SPORTGERÄTESTÄNDER**

(30) Priorität: 30.03.2022 AT 812022
(71) Anmelder: Citybull Ges.m.b.H., 3240 Mank (AT)
(72) Erfinder: Perger, Manfred, 3240 Mank (AT)
(74) Vertreter: Ellmeyer, Wolfgang

(57) **Zusammenfassung**

Sportgeräteständer zur diebstahlsicheren Aufbewahrung von Sportgeräten (10, 11) mit einer Stützstruktur (2, 3, 4, 5, 7) und zumindest einer Reihe von mehreren, auf der Stützstruktur angeordneten Schließeinheiten (8), wobei jede der Schließeinheiten (8) eine offene Stellung und eine geschlossene Stellung aufweist, wobei in der offenen Stellung der Schließeinheit (8) jeweils ein Teilbereich eines Sportgeräts (10, 11) einbringbar und in der geschlossenen Stellung der Schließeinheit (8) über eine Verriegelungsvorrichtung verriegelbar ist, um gegen eine Entnahme gesichert zu sein, wobei die Schließeinheiten (8) jeweils eine steuerbare Verriegelungsvorrichtung (30) aufweisen und eine Steuervorrichtung vorgesehen ist, über welche jede der Schließeinheiten (8) in der geschlossenen Stellung verriegelbar oder entriegelbar ist, und dass der Sportgeräteständer (1) eine netz-unabhängige Stromversorgung aufweist, welche mit der Steuervorrichtung verbunden ist.

## Beschreibung

Die Erfindung betrifft einen Sportgeräteständer zur diebstahlsicheren Aufbewahrung von Sportgeräten mit einer Stützstruktur und zumindest einer Reihe von mehreren, auf der Stützstruktur angeordneten Schließeinheiten, wobei jede der Schließeinheiten eine offene Stellung und eine geschlossene Stellung aufweist, wobei in der offenen Stellung der Schließeinheit jeweils ein Teilbereich eines Sportgeräts einbringbar und in der geschlossenen Stellung der Schließeinheit über eine Verriegelungsvorrichtung verriegelbar ist, um gegen eine Entnahme gesichert zu sein.

Die vorübergehende sichere Unterbringung von Schiern, aber auch anderen Sportgeräten wie Fahrrädern, während des Besuches einer Gaststätte od. dgl., z.B. einer Schihütte ist nach wie vor ein ungelöstes Problem, da Gastwirte oder Liftbetreiber in entlegenen Lagen oftmals keine Möglichkeit haben, für entsprechende Vorrichtungen zu sorgen.

Das Anbieten einer diebstahlsicheren Aufbewahrung von Schiern erfordert einen Kapitaleinsatz, den die meisten z.B. Gastwirte nicht in der Lage sind zu erbringen, weshalb für diese zusätzliche Dienstleistung ein Entgelt verrechnet werden müsste, was einen entsprechenden administrativen Aufwand zur Folge hätte, der aufgrund des notorischen Arbeitskräftemangels oft nicht geleistet werden kann.

Aufgabe der Erfindung ist es daher, einen Sportgeräteständer der eingangs genannten Art anzugeben, der die Möglichkeit einer Selbstbedienung durch den Benutzer und zugleich der automatischen Verrechnung z.B. für die in Anspruch genommene Zeit der diebstahlsicheren Aufbewahrung bietet. Weitere Aufgabe der Erfindung ist es, auch für Drittanbieter, die in keinem Naheverhältnis zu Gaststätten oder Liftbetreibern stehen oder keine vertragliche Bindung mit diesen eingehen wollen, das von örtlichen Einrichtungen unabhängige Aufstellen von Sportgeräteständern für die Benutzung z.B. durch Schifahrer im Winter oder Radfahrer im Sommer zu ermöglichen.

Erfindungsgemäß wird dies dadurch erreicht, dass die Schließeinheiten jeweils eine steuerbare Verriegelungsvorrichtung aufweisen und eine Steuervorrichtung vorgesehen ist, über welche jede der Schließeinheiten in der geschlossenen Stellung verriegelbar oder entriegelbar ist, und dass der Sportgeräteständer eine netz-unabhängige Stromversorgung aufweist, welche mit der Steuervorrichtung verbunden ist.

Das Bereitstellen einer netz-unabhängigen Stromversorgung des erfindungsgemäßen Sportgeräteständers ermöglicht das Aufstellen im Gelände ohne von einer Netzversorgung abhängig zu sein, was gerade in einer entfernen Lage z.B. am Berg einen wesentlichen Vorteil für einen Drittanbieter darstellt, da keine Stromleitung verlegt werden muss und auch keine Abhängigkeit von einem Netzbetreiber gegeben ist, der möglicherweise sehr hohe Kosten für die Installation eines eigenen Energiezählers in Rechnung stellen würde. Durch die autarke Stromversorgung und die damit versorgte Steuereinrichtung besteht die Möglichkeit, die Zeit, die für die Aufbewahrung der Sportgeräte in Anspruch genommen wird, automatisch zu erfassen und einer Verrechnung zuzuführen.

Um eine Nutzung sowohl im Winter als auch im Sommer zu ermöglichen, können gemäß einem weiteren Ausführungsbeispiel der Erfindung die Schließeinheiten durch wechselbare Schließeinheiten gebildet sein, sodass z.B. im Winter Schließeinheiten für Wintersportgeräte, wie z.B. Schier, und im Sommer für Sommersportgeräte montiert werden können.

In weiterer Ausbildung der Erfindung können die wechselbaren Schließeinheiten daher Schließfächer zur Sicherung von Schipaaren gegen Entnahme und Schließkrallen zur Sicherung von Fahrrädern gegen Entnahme umfassen, die wahlweise am Sportgeräteständer montierbar sind. Die passenden Schließeinheiten können somit je nach Bedarf und Jahreszeit am erfindungsgemäßen Sportgeräteständer angebracht werden.

Eine Weiterbildung der Erfindung kann darin bestehen, dass die Stromversorgung durch einen Akku gebildet ist, wobei nach einer bestimmten Betriebszeit der Akku durch Servicepersonal getauscht oder geladen werden kann.

Ein Ausführungsbeispiel der Erfindung kann darin bestehen, eine Photovoltaik-Vorrichtung vorzusehen, die über eine Ladesteuerung mit dem Akku verbunden ist, sodass bei Sonneneinstrahlung eine Ladung des Akkus erfolgen kann, wodurch sich eine Verlängerung der Betriebszeit ergibt.

In weiterer Ausbildung der Erfindung kann ein Bezahlterminal vorgesehen sein, das mit der Steuervorrichtung verbunden ist und über das die Benutzungszeit abgerechnet werden kann, welche über eine Bankomatkarte oder Internetbezahldienste bezahlt werden kann. Dazu kann eine Internetanbindung der Steuervorrichtung über Mobilfunk vorgesehen sein. Da gerade in den Schigebieten die Mobilfunkversorgung sehr gut ausgebaut ist, kann dieser Dienst in fast allen Anwendungsfällen für den erfindungsgemäßen Sportgeräteständer in Anspruch genommen werden. Die Erfindung beinhaltet auch die Möglichkeit, die beanspruchte Zeit über einen Drittanbieter, z.B. mit gültiger Liftkarte oder gültiger Schiffskarte abzurechnen.

Ein weiteres Ausführungsbeispiel der Erfindung kann durch einen Touch-Bildschirm zur Bedienung des Bezahlterminals und als Werbeanzeige vorgesehen sein, wodurch vielfältige vorteilhafte Funktionen erzielbar sind.

Auch die Verwaltung von mietbaren Sportgeräten kann vom erfindungsgemäßen Sportgeräteständer übernommen werden, und zwar dadurch, dass gemäß einer Variante der Erfindung über die Steuervorrichtung Miet-Sportgeräte detektierbar sind, und die Schließeinheiten zur Entnahme oder Rückgabe der Miet-Sportgeräte in die offene Stellung/geschlossene Stellung steuerbar sind.

Weiters kann in Weiterbildung der Erfindung eine mobile Funktelephonvorrichtung vorgesehen sein, die mit der Steuervorrichtung verbunden ist, wobei über die Funktelephonvorrichtung eine Verbindung mit einem Funktelephon eines Benutzers herstellbar ist, sodass der Benutzer über eine auf das Funktelefon ladbare Anwendung die Verriegelung und Entriegelung eines der Schließfächer in Abhängigkeit von einem Bezahlvorgang steuern kann.

Um eine stabile Positionierung und/oder Verankerung auf dem Untergrund zu gewährleisten, kann in weiterer Ausbildung der Erfindung die Stützstruktur zwei Vertikalstützen und einen zentralen horizontalen Längsholm umfassen, der an seinen Enden mit den Vertikalstützen verbunden ist, wobei die Schließfächer an dem horizontalen Längsholm angebracht sein können.

Bei freier Aufstellung des erfindungsgemäßen Sportgeräteständers im Gelände ergibt sich eine sehr gute Platzausnutzung, wenn die Sportgeräte von zwei Seiten in den Sportgeräteständer eingestellt werden können.

Gemäß einem weiteren Ausführungsbeispiel der Erfindung kann daher vorgesehen, dass der Sportgeräteständer eine Mittelebene aufweist, die durch den zentralen Längsholm verläuft und zu beiden Seiten der Mittelebene jeweils eine Reihe von nebeneinander angeordneten Schließeinheiten angeordnet sind, die an dem zentralen Längsholm angebracht sind.

In weiterer Ausbildung der Erfindung kann vorgesehen sein, dass die Schließeinheiten als Schließfächer für Schipaare ausgebildet sind, die sich zu beiden Seiten der Mittelebene horizontal nach außen erstrecken und an der freien Außenseite jeweils eine Aufnahmeöffnung aufweisen, um eine einfache Benutzung und Wartung zu ermöglichen.

Eine besonders platzsparende Anordnung von Schipaaren lässt sich erzielen, wenn gemäß einer weiteren Ausführungsform der Erfindung die Aufnahmeöffnung des Schließfaches schlitzförmig ausgebildet ist, und sich quer zum Längsholm erstreckt, wobei die Breite der Aufnahmeöffnung geeignet ist, ein Paar mit ihren Laufflächen aneinander gestellter Schier mit der Schmalseite aufzunehmen.

Nachfolgend wird die Erfindung anhand der in den Zeichnungen dargestelten Ausführungsbeispiele eingehend erläutert. Es zeigt dabei
Fig.1 eine dreidimensionale Darstellung einer Ausführungsform des erfindungsgemäßen Sportgeräteständers;
Fig.2, 3 und 4 eine Draufsicht, eine Seiten- und eine Stirnansicht des Sportgeräteständers gemäß Fig.1 und
Fig.5 ein vergrößertes Detail einer weiteren Ausführungsform des erfindungsgemäßen Sportgeräteständers.

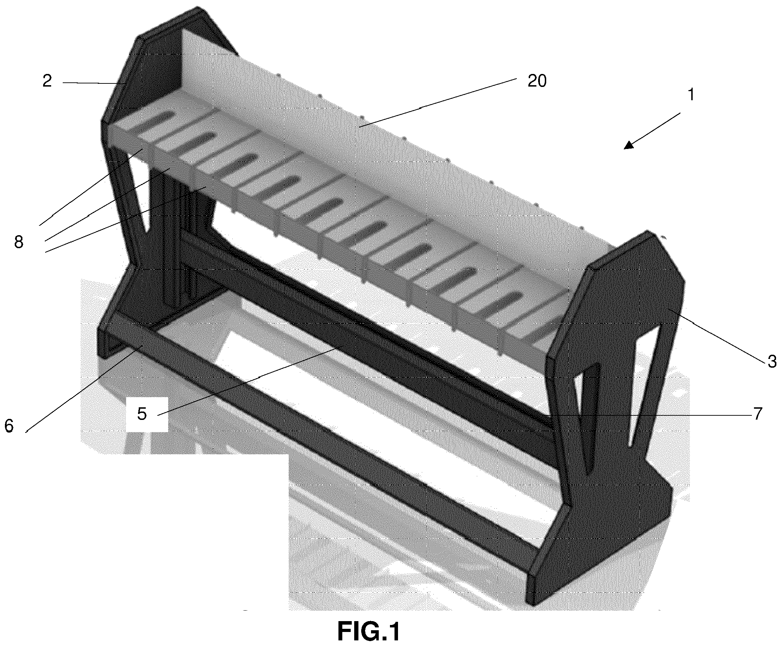

Fig.1 bis 4 zeigen einen Sportgeräteständer, der wechselbare Schließeinheiten 8 aufweist, sodass er je nach Schließeinheit zur Sicherung eines Schipaares, eines Fahrrades oder eines anderen Sportgerätes dienen kann.

Der in den Fig. 1 bis 4 gezeigte Sportgeräteständer weist Schließeinheiten 8 zur diebstahlsicheren Aufbewahrung von Schiern auf und ist mit einer Stützstruktur ausgebildet, die zwei an den Längsenden angeordnete Vertikalstützen 2, 3 und einen zentralen horizontalen Längsholm 4 umfasst, der an seinen Enden mit den Vertikalstützen 2, 3 verbunden ist. Im unteren Bereich des Sportgeräteständers 1 sind zur weiteren Stabilisierung ein mittlerer Längsholm 5 und zwei seitliche Längsholme 6,7 vorgesehen.

Die als Schließfächer 8 ausgebildeten Schließeinheiten können ausgetauscht werden, z.B. durch (nicht dargestellte) Schließkrallen, die die sichere Aufbewahrung von Fahrrädern ermöglichen, die am Sportgeräteständer 1 montierbar sind, wodurch eine Funktionsänderung sehr leicht durchführbar ist, um für die jeweiligen Saison ausgestattet zu sein.

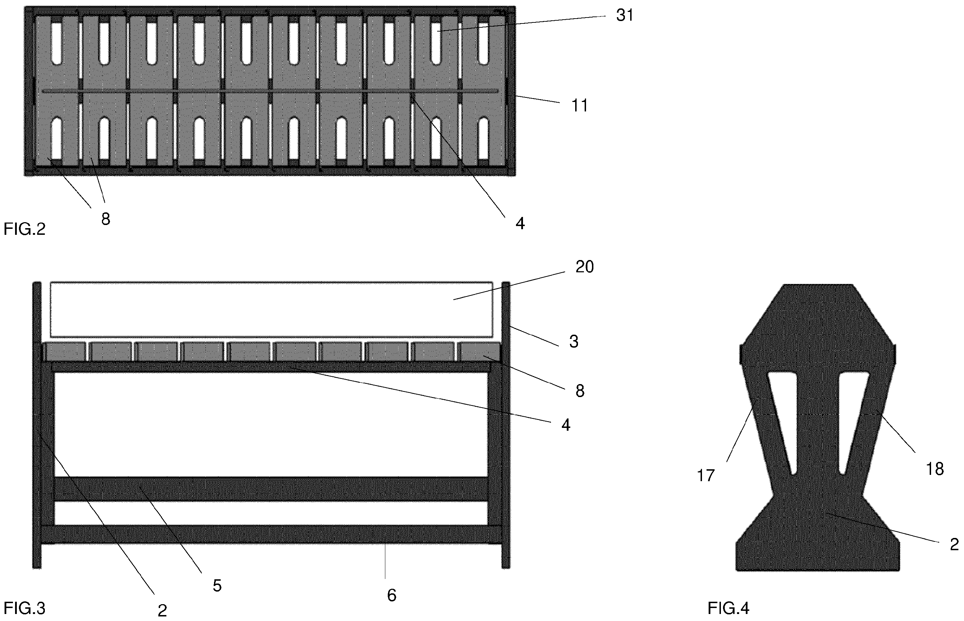

Die Längsholme 4, 5, 6, 7 sind aus Formrohren gebildet, während die Vertikalstützen 2, 3 in Form von Metallblechteilen ausgebildet sind. Die Vertikalstützen 2, 3 weisen zur Versteifung schräge Stützstreben 17, 18 auf (Fig.4).

Die Stützstruktur kann im Rahmen der Erfindung auch in einer anderen, gleichartig wirkenden Form ausgeführt sein.

Eine Trennwand 20, die oberhalb des zentralen Längsholms 4 in einer Mittelebene des Sportgeräteständers 1 angeordnet ist, verläuft zusammen mit dem zentralen Längsholm 4 in einer Mittelebene, hinsichtlich der der Sportgeräteständer 1 symmetrisch ausgebildet ist.

Zu beiden Seiten der Mittelebene ist jeweils eine Reihe von mehreren nebeneinander angeordneten Schließfächern 8 angeordnet, die an dem zentralen Längsholm 4 angebracht sind.

Jedes Schließfach ist ein Biegeteil aus Stahlblech, der wechselbar montiert ist.

Die Schließfächer 8 erstrecken sich zu beiden Seiten der Trennwand 20 bzw. Mittelebene horizontal nach außen und weisen an der freien Außenseite jeweils eine Aufnahmeöffnung 31 auf, um eine einfache Benutzung und Wartung zu ermöglichen.

Die Aufnahmeöffnung 31 des Schließfaches 8 ist schlitzförmig ausgebildet und erstreckt sich quer zum zentralen Längsholm 4, wobei die Breite der Aufnahmeöffnung 31 geeignet ist, ein Paar mit ihren Laufflächen aneinander gestellter Schier mit der Schmalseite aufzunehmen.

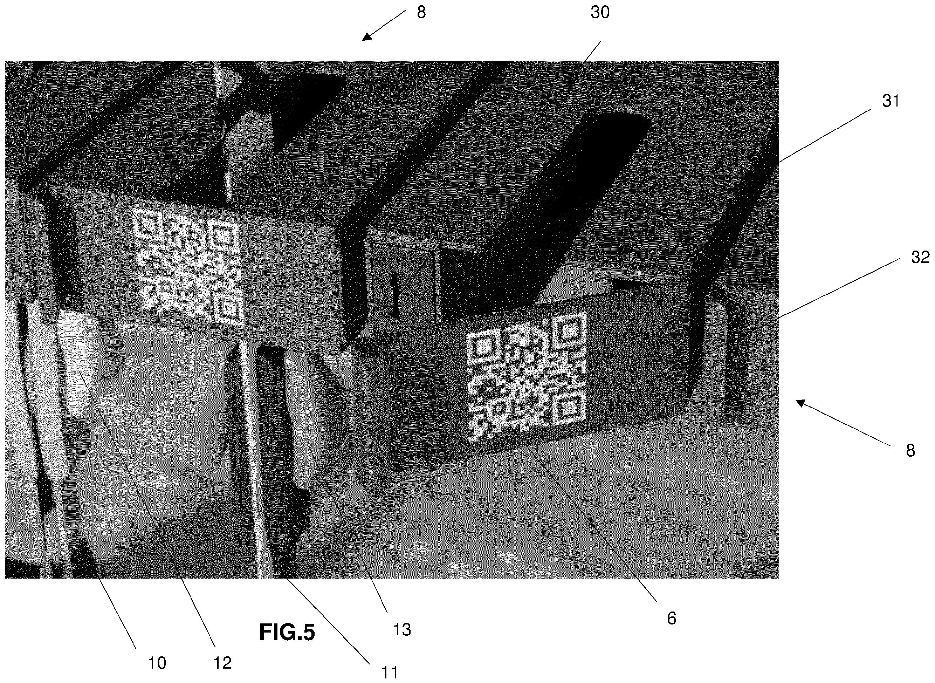

Jedes der Schließfächer 8 weist eine offene Stellung und eine geschlossene Stellung auf, wobei in der offenen Stellung des Schließfaches 8 jeweils ein Paar Schi 10, 11 (Fig.5) im Ausmaß eines Teilabschnitts desselben oberhalb einer zugehörigen Schibindung 12,13 einbringbar sind und das Paar Schi 10, 11 in der geschlossenen Stellung des Schließfaches 8 über eine Verriegelungsvorrichtung, die eine schwenkbare Klappe 32 aufweist, verriegelbar ist, um gegen eine Entnahme gesichert zu sein.

Erfindungsgemäß weisen die Schließfächer 8 jeweils eine steuerbare Verriegelungsvorrichtung 30 auf, wobei eine (nicht dargestellte) Steuervorrichtung vorgesehen ist, über welche jedes der Schließfächer 8 in der geschlossenen Stellung verriegelbar oder entriegelbar ist. Der Sportgeräteständer 1 weist ferner eine (nicht dargestellte) netz-unabhängige Stromversorgung auf, welche mit der Steuervorrichtung verbunden ist.

In analoger Weise können anstelle der Schließfächer 8 andere Schließeinheiten, z.B. Schließkrallen für Fahrräder montiert sein, die durch dieselbe Steuervorrichtung verriegelbar oder entriegelbar sind.

Die Stromversorgung ist durch einen (nicht dargestellten) Akku gebildet, der im Sportgeräteständer 1 untergebracht ist. Weiters ist eine (nicht dargestellte) Photovoltaik-PV-Vorrichtung vorgesehen, die über eine (nicht dargestellte) Ladesteuerung mit dem Akku verbunden ist. Anstelle der PV-Vorrichtung kann auch eine andere lokale Energieerzeugungsquelle (z.B. ein Windrad) treten.

Weiters ist ein (nicht dargestelltes) herkömmliches Bezahlterminal vorgesehen, das mit der Steuervorrichtung verbunden ist und über welches Bezahlvorgänge zu den von der Steuervorrichtung aufgezeichneten Nutzungszeiten der einzelnen Schließfächer 8 durch Benutzer abgewickelt werden können.

Weiters ist eine (nicht dargestellte) mobile Funktelephonvorrichtung vorgesehen, die mit der Steuervorrichtung verbunden ist, wobei über die Funktelephonvorrichtung eine Verbindung mit einem Funktelephon eines Benutzers herstellbar ist, sodass der Benutzer über eine auf das Funktelefon ladbare Anwendung die Verriegelung und Entriegelung eines der Schließfächer 8 in Abhängigkeit von einem Bezahlvorgang steuern kann.

## Patentansprüche

1. Sportgeräteständer zur diebstahlsicheren Aufbewahrung von Sportgeräten (10, 11) mit einer Stützstruktur (2, 3, 4, 5, 7) und zumindest einer Reihe von mehreren, auf der Stützstruktur angeordneten Schließeinheiten (8), wobei jede der Schließeinheiten (8) eine offene Stellung und eine geschlossene Stellung aufweist, wobei in der offenen Stellung der Schließeinheit (8) jeweils ein Teilbereich eines Sportgeräts (10, 11) einbringbar und in der geschlossenen Stellung der Schließeinheit (8) über eine Verriegelungsvorrichtung verriegelbar ist, um gegen eine Entnahme gesichert zu sein, **dadurch gekennzeichnet, dass** die Schließeinheiten (8) jeweils eine steuerbare Verriegelungsvorrichtung (30) aufweisen und eine Steuervorrichtung vorgesehen ist, über welche jede der Schließeinheiten (8) in der geschlossenen Stellung verriegelbar oder entriegelbar ist, und dass der Sportgeräteständer (1) eine netz-unabhängige Stromversorgung aufweist, welche mit der Steuervorrichtung verbunden ist.

2. Sportgeräteständer nach Anspruch 1, **dadurch gekennzeichnet, dass** die Schließeinheiten durch wechselbare Schließeinheiten gebildet sind.

3. Sportgeräteständer nach Anspruch 2, **dadurch gekennzeichnet, dass** die wechselbaren Schließeinheiten Schließfächer (8) zur Sicherung von Schipaaren (10, 11) gegen Entnahme und Schließkrallen zur Sicherung von Fahrrädern gegen Entnahme umfassen, die wahlweise am Sportgeräteständer montierbar sind.

4. Sportgeräteständer nach Anspruch 1, 2 oder 3, **dadurch gekennzeichnet, dass** die Stromversorgung durch einen Akku gebildet ist.

5. Sportgeräteständer nach Anspruch 4, **dadurch gekennzeichnet, dass** eine Photovoltaik-Vorrichtung vorgesehen ist, die über eine Ladesteuerung mit dem Akku verbunden ist.

6. Sportgeräteständer nach einem der vorhergehenden Ansprüche, **dadurch gekennzeichnet, dass** ein Bezahlterminal vorgesehen ist, das mit der Steuervorrichtung verbunden ist.

7. Sportgeräteständer nach Anspruch 6, **dadurch gekennzeichnet, dass** ein Touch-Bildschirm zur Bedienung des Bezahlterminals und als Werbeanzeige vorgesehen ist.

8. Sportgeräteständer nach einem der vorhergehenden Ansprüche, **dadurch gekennzeichnet, dass** über die Steuervorrichtung Miet-Sportgeräte detektierbar sind, und die Schließeinheiten zur Entnahme oder Rückgabe der Miet-Sportgeräte in die offene Stellung/geschlossene Stellung steuerbar sind.

9. Sportgeräteständer nach einem der vorhergehenden Ansprüche, **dadurch gekennzeichnet, dass** eine mobile Funktelephonvorrichtung vorgesehen ist, die mit der Steuervorrichtung verbunden ist, und dass über die Funktelephonvorrichtung eine Verbindung mit einem Funktelephon eines Benutzers herstellbar ist, sodass der Benutzer über eine auf das Funktelefon ladbare Anwendung die Verriegelung und Entriegelung eines der Schließfächer (8) in Abhängigkeit von einem Bezahlvorgang steuern kann.

10. Sportgeräteständer nach einem der vorhergehenden Ansprüche, **dadurch gekennzeichnet, dass** die Stützstrukur zwei Vertikalstützen (2, 3) und einen zentralen horizontalen Längsholm (4) umfasst, der an seinen Enden mit den Vertikalstützen (2, 3) verbunden ist, und dass die Schließeinheiten (8) an dem horizontalen Längsholm (4) angebracht sind.

11. Sportgeräteständer nach einem der vorhergehenden Ansprüche, **dadurch gekennzeichnet, dass** der Sportgeräteständer (1) eine Mittelebene aufweist, die durch den zentralen Längsholm (4) verläuft und zu beiden Seiten der Mittelebene jeweils eine Reihe von nebeneinander angeordneten Schließeinheiten (8) angeordnet sind, die an dem zentralen Längsholm (4) angebracht sind.

12. Sportgeräteständer nach Anspruch 7, **dadurch gekennzeichnet, dass** die Schließeinheiten als Schließfächer (8) für Schipaare ausgebildet sind, die sich zu beiden Seiten der Mittelebene horizontal nach außen erstrecken und an der freien Außenseite jeweils eine Aufnahmeöffnung (31) aufweisen.

13. Sportgeräteständer nach Anspruch 12, **dadurch gekennzeichnet, dass** die Aufnahmeöffnung (31) schlitzförmig ausgebildet ist, und sich quer zum Längsholm (4) erstreckt, wobei die Breite der Aufnahmeöffnung (31) geeignet ist, ein Paar Schi aufzunehmen.
